Europäisches Patentamt

European Patent Office

Office européen des brevets

(19)

(11)     **EP 1 396 123 B1**

(12)     **FASCICULE DE BREVET EUROPEEN**

(45) Date de publication et mention
de la délivrance du brevet:
**04.10.2006 Bulletin 2006/40**

(51) Int Cl.:
***H04L 12/56*** (2006.01)

(21) Numéro de dépôt: **02747502.9**

(22) Date de dépôt: **04.06.2002**

(86) Numéro de dépôt international:
**PCT/FR2002/001901**

(87) Numéro de publication internationale:
**WO 2002/101999 (19.12.2002 Gazette 2002/51)**

(54) **PROCEDE DE TRANSPORT DE PAQUETS A LONGUEUR VARIABLE DANS DES TRAMES DE CIRCUITS TEMPORELS**

VERFAHREN ZUM TRANSPORT VON PAKETEN VARIABLER LÄNGE IN ZEITLICHEN LEITUNGSRAHMEN

METHOD FOR TRANSPORTING VARIABLE-LENGTH PACKETS IN TEMPORAL CIRCUIT FRAMES

(84) Etats contractants désignés:
**AT BE CH CY DE DK ES FI FR GB GR IE IT LI LU MC NL PT SE TR**

(30) Priorité: **12.06.2001 FR 0107765**

(43) Date de publication de la demande:
**10.03.2004 Bulletin 2004/11**

(73) Titulaire: **FRANCE TELECOM**
**75015 Paris (FR)**

(72) Inventeurs:
• **QUINQUIS, Jean.Paul**
  **F-22700 Perros-Guirec (FR)**
• **COCHENNEC, Jean-Yves**
  **22560 Trebeurden (FR)**
• **ROUSSEL, Olivier**
  **F-22700 Perros-Guirec (FR)**
• **HOUDOIN, Thierry**
  **F-22560 Pleumeur Bodou (FR)**

(74) Mandataire: **Maillet, Alain**
  **Cabinet le Guen & Maillet,**
  **5, Place Newquay,**
  **B.P. 70250**
  **35802 Dinard Cedex (FR)**

(56) Documents cités:
**EP-A- 0 874 530            WO-A-00/59261**

**Description**

La présente invention concerne un procédé de transport de paquets à longueur variable tels que des paquets AAL2 et, éventuellement des cellules telles que des cellules ATM dans des trames de circuits temporels, telles que des trames E1/T1, découpées chacune en une pluralité d'intervalles de temps occupés chacun par un octet. Plus particulièrement, les paquets à longueur variable sont des paquets qui sont conformes au protocole AAL2 (Recommandation 1363.2 de l'UIT), alors que les trames de circuits temporels sont par exemple du type de celles qui sont définies dans les recommandations G.703 et G.704 de l'IUT et qui sont généralement nommées des trames E1 ou T1 ou encore du type de celles que l'on nomme également SDSL ou HDSL.

Le transport d'informations conformes au protocole AAL2 (Recommandations I.363.2, I366.1 et 1366.2 de l'UIT) et la mise en oeuvre de la signalisation qui y est associée (Recommandation Q.2630.2 de l'UIT) sont recommandés ou envisagés dans différents réseaux de communication dont le plus connu est à l'heure actuelle le réseau d'accès pour mobiles de 3ème génération baptisé UTRAN (UMTS Terrestrial Radio Access Network). L'utilisation de ce protocole AAL2 sur un réseau d'accès de type à cellules ATM a été définitivement adoptée par l'organisme de normalisation 3GPP pour la version de 1999 (R99) de l'UTRAN, cette version étant appelée aujourd'hui R3. La présente invention trouve donc application dans les architectures de contrôleur de réseau mobile RNC et dans les stations de base dites node B d'un réseau d'accès UTRAN. Le domaine d'application de la présente invention se situe par ailleurs à la périphérie des réseaux lorsque les accès font appel à des raccordements existants de type circuits. C'est notamment aujourd'hui envisagé pour raccorder des stations de base Node B vers des concentrateurs ou des contrôleurs de réseaux de mobiles RNC dans certaines configurations de réseaux, notamment en zones rurales.

D'autres domaines d'application peuvent également être envisagés, comme par exemple le transport de la voix sur ADSL ou le raccordement de PABX à travers un réseau de transport ATM en utilisant la fonction de « trunking » définie dans la couche SSCS I.366.2 de l'UIT.

On rappelle ci-dessous les principes qui gouvernent le protocole de transport dit AAL2 décrit dans les trois recommandations de l'IUT 1363.2, I366.1 et I366.2. Ce protocole de transport a été défini pour contourner le problème du temps d'assemblage d'une cellule ATM qui devient critique pour les bas débits. En effet, à 16 kbit/s, ce temps d'assemblage est de 24 ms pour un remplissage complet de la cellule ATM. La solution qui a été retenue consiste à multiplexer les flux de plusieurs communications dans un même canal ATM en faisant appel à une structuration des informations en paquets, appelées minicellules ou également paquets CPS. Ce mode de transport constitue la partie basse du protocole nommée sous-couche CPS (Common Part Sublayer). Les indispensables fonctions d'adaptation se situent au-dessus de la sous-couche CPS dans des sous-couches nommées SSCS (Service Specific Convergence Sublayer). La première, la sous-couche SSCS de segmentation est décrite dans la recommandation 1.366.1 de l'UIT et est destinée au transport d'unités de données comportant un nombre d'octets important. La seconde, la sous-couche SSCS de trunking pour le temps réel est décrite dans la recommandation 1.366.2 de l'UIT.

Une séquence de paquets AAL2 est garantie sur chaque canal AAL2, mais le service fourni par la sous-couche CPS est de type non-assuré, c'est-à-dire que les paquets manquants (par exemple suite à des pertes de cellules ATM les transportant) ne sont pas remplacées par retransmission à ce niveau.

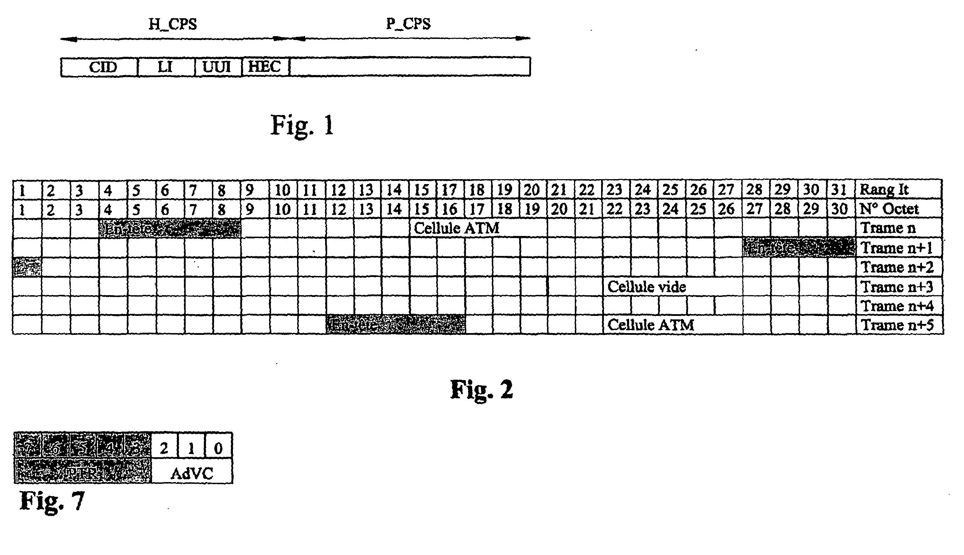

On a représenté à la Fig. 1a le format des paquets AAL2 de la couche CPS du protocole AAL2 tel qu'il est spécifié dans la recommandation 1.363.2. de l'IUT. Les paquets AAL2 ont un en-tête H_CPS de trois octets et une partie utile P_CPS de longueur variable contenant l'information usager. Par défaut, cette longueur est limitée à 45 octets. Comme cela est visible à la Fig. 1a, l'en-tête H_CPS est constitué de la manière suivante :

- un champ d'identification de connexion CID qui est un champ de 8 bits et qui permet d'identifier la connexion AAL2,
- un champ de longueur LI qui est un champ de 6 bits et qui code la longueur de la partie utile du paquet de telle manière que LI+ 1 soit égale au nombre d'octets,
- un champ d'informations d'utilisateur à utilisateur UUI de 5 bits,
- un champ HEC qui est un champ de 5 bits pour la protection contre les erreurs d'en-tête.

Les paquets AAL2 sont généralement transmis transportés par des cellules ATM.

On rappelle ci-dessous les considérations concernant le transport de cellules ATM sur des supports tramés de type E1/T1. Elles ont fait l'objet de la Recommandation G.804 de l'UIT intitulée « ATM Cell Mapping into Plesiochronous Digital Hierarchy » dans le cas d'une utilisation complète de la bande offerte, c'est-à-dire les 30 intervalles de temps IT de la trame. Elles sont aujourd'hui implantées dans des modules spécifiques de commutateurs ATM.

Une trame de circuits temporels telle que celle qui fait l'objet de la recommandation G.704 est découpée en 32 intervalles IT occupés chacun par un octet. On considère ici que les seuls intervalles 1 à 15 et de 17 à 31 transportent des données utilisateur. Une trame a une durée de 125 µs et le débit des données transportées par chaque intervalle IT est limité à 64 kb/s. En regroupant les intervalles de temps IT, il est possible d'écouler les informations à un débit de N fois 64 kb/s, c'est-à-dire 2048 kb/s si l'on considère les 32 intervalles de temps IT, mais 1920 kb/s si l'on considère les 30 intervalles de temps utilisés pour le transport des données utilisateur.

Chaque octet d'une cellule ATM est cadré dans un unique intervalle de temps IT. Il n'y a pas de relation entre le début d'une trame et le début d'une cellule ATM. Cela est lié au fait que le nombre d'octets d'une cellule ATM est différent de celui d'une trame circuit.

La Fig. 2 représente un exemple de multiplexage de cellules ATM sur une structure de trame telle qu'il vient d'être décrit. Les différentes trames sont représentées en piles et numérotées « trame n », « trame n+1 », etc. Elles se succèdent temporellement dans cet ordre. Chaque intervalle de temps est référencé par son rang et par le numéro d'octet utilisé pour la transmission des données correspondant. On n'a représenté ici que les 30 intervalles de temps IT qui sont utilisés (les numéros d'octet varient donc de 1 à 30) et donc pas les intervalles de temps de rang 0 et 16 qui sont utilisés pour d'autres fonctions que le transport de données.

On rappelle ici que les cellules ATM sont des paquets de longueur fixe à 53 octets dont 5 sont affectés à l'entête. A la Fig. 2, les octets des cellules ATM non vides sont donc représentés par une suite de cases correspondant chacune à un intervalle de temps dans une trame. Les en-têtes de ces cellules sont en grisé. Quant aux cellules vides, elles ne sont pas représentées en tant que cases (elles ne sont pas cloisonnées).

On peut constater que les cellules sont consécutives à l'intérieur de chaque trame.

Pour permettre la transmission des trafics de type paquet et des trafics de type circuit sur le même support, il a été prévu l'utilisation d'une partie seulement des intervalles de temps IT pour le transport des données utilisateur. Cette utilisation a été décrite dans un document de spécification produit par l'ATM Forum et intitulé "ATM on Fractional E1/T1 : AF-PHY-0130.00" d'août 1999 et elle consiste à assigner, pour le transport de cellules ATM, N intervalles à 64 kb/s parmi les 30 intervalles de temps IT possibles de la trame, les intervalles IT non-utilisés à cette fin pouvant assurer classiquement le transfert de données en mode circuit, par exemple les communications téléphoniques.

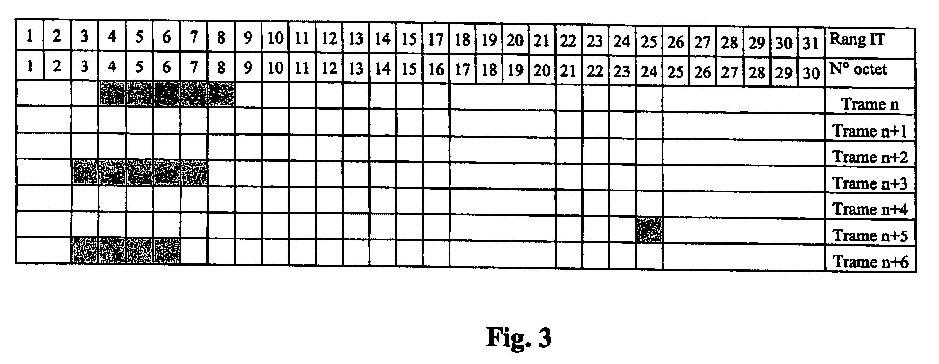

A la Fig. 3, seule une fraction de 18 intervalles de temps est affectée au transport ATM, ces intervalles de temps IT étant de rang dans chaque trame compris entre 3 et 16, d'une part, et 21 et 24, d'autre part. Les intervalles de temps IT non utilisés sont représentés non cloisonnés. Les numéros d'octets utilisés sont compris ici entre 1 et 18.

Il est tout à fait possible de transmettre des paquets AAL2 tels que décrits ci-dessus portés par des cellules ATM, elles-mêmes transportées dans des trames temporelles telles que cela est également décrit ci-dessus. Une trame de type E1/T1 est dans ce cas transparente au contenu des cellules. A l'extrémité réception de la liaison E1, les cellules ATM sont d'abord extraites de la trame temporelle, puis ce sont les paquets AAL2 qui sont extraits des cellules ATM pour leur réassemblage. De façon symétrique, à l'extrémité émission, les paquets AAL2 sont insérés dans des cellules ATM qui sont ensuite insérées dans la trame temporelle et ainsi émises.

L'inconvénient de cette solution est que le rapport entre le nombre d'octets utiles et le nombre d'octets transmis sur la liaison est peu favorable en terme de rendement. En effet, les 5 octets des en-têtes des cellules ATM auxquels s'ajoutent un nombre très variable d'octets de bourrage liés au multiplexage des minicellules, sont autant d'intervalles de temps IT qu'on peut considérer comme perdus pour les données usager.

Les documents WO-A-00/59261 et EP-A-874 530 proposent des solutions à ce problème particulier.

Le premier concerne en effet un procédé pour le transport de minicellules dans un canal, par exemple du type E1 ou T1, comprenant une pluralité de multitrames, chaque multitrame comportant elle-même plusieurs intervalles de temps. Ce procédé est tel que le transport de ces minicellules ne passe plus par la couche ATM. En d'autres termes, l'en-tête des cellules ATM est supprimé et les minicellules sont directement transportés dans les trames du type E1 ou T1. Néanmoins, ce procédé nécessite d'insérer un octet de départ dans le premier intervalle de temps de chaque multitrame, ledit octet de départ comprenant un champ numéro de séquence (séquence number) servant à comporter le nombre de multitrames.

Quant au document EP-A-874 530, il prévoit la transmission de minicellules du type AAL2 dans des trames du type T1. Pour ce faire, la couche ATM est éliminée. Là, aussi un pointeur à six bits est utilisé pour définir l'emplacement de départ du prochain paquet de la trame.

Le but de la présente invention est de proposer un procédé de transport de paquets à longueur variable tel qu'il vient d'être décrit mais également d'éventuelles cellules, telles que des cellules ATM dans une trame de circuits temporels permettant d'utiliser avec un maximum d'efficacité le support de transmission par trames de circuits virtuels, par exemple de type E1/T1, qui a une bande passante relativement faible (en l'occurrence 1,920 Mb/s). Ainsi, il est de prévoir un procédé de transport de paquets à longueur variable tels que des paquets AAL2 et, éventuellement des cellules telles que des cellules ATM dans des trames de circuits temporels telles que des trames E1/T1 découpées chacune en une pluralité d'intervalles de temps occupés chacun par un octet.

Un procédé de transport selon l'invention est également du type où les octets consécutifs de chaque paquet à longueur variable et de chaque cellule se trouvent dans des intervalles de temps consécutifs d'au moins un groupe d'intervalles de temps desdites trames, le premier octet d'un paquet ou d'une cellule étant placé à un intervalle de temps pointé par un pointeur occupant un intervalle de temps spécifique dudit groupe d'intervalles de temps correspondant.

Il peut également être intéressant de pouvoir différentier les circuits virtuels auxquels peuvent appartenir les paquets ou cellules transportées selon le type de transport qu'ils permettent. Par exemple, il peut être intéressant de différentier les circuits virtuels selon qu'ils permettent le transport de la voix aux moyens de paquets AAL2, le transport de données également aux moyens de paquets AAL2, le transport de cellules ATM, le transport d'informations de signalisation de contrôle au moyen de paquets AAL5 contenus dans des cellules ATM, etc.

Pour ce faire, l'invention est caractérisée en ce qu'à chaque pointeur est associé une adresse de circuit virtuel définissant un circuit virtuel pour le transport dudit paquet ou de ladite cellule pointé par ledit pointeur, ainsi que le ou les paquets ou cellules dans les intervalles de temps de la trame appartenant au même groupe d'intervalles de temps que ledit paquet ou ladite cellule. Par exemple, ledit pointeur et ladite adresse de circuit virtuel sont constitués de bits d'un même octet.

Selon une autre caractéristique de l'invention, ledit pointeur occupe le premier intervalle de temps du groupe d'intervalles de temps correspondant. Sa valeur est avantageusement le rang dans le groupe du premier octet de l'en-tête d'un paquet moins un ou, lorsque la trame est partiellement vide et qu'elle ne contient pas d'en-tête ou pas d'en-tête complet de paquet, sa valeur est le rang dans le groupe du premier octet vide moins un. Par ailleurs, sa valeur est nulle lorsque le premier octet dudit paquet ou de ladite cellule se trouve dans l'intervalle de temps qui suit directement celui qui est affecté audit pointeur. Sa valeur est égale à une valeur spécifique lorsque les intervalles de temps du groupe correspondant sont vides, valeur spécifique qui est par exemple égale au nombre d'intervalles de temps que chaque trame comporte. De même, la valeur du pointeur est égale à une valeur spécifique lorsque tous les intervalles de temps du groupe sont occupés par les octets d'un paquet ou d'une cellule dont l'en-tête se trouve dans la trame précédente. Cette valeur spécifique est par exemple égale au nombre d'intervalles de temps que chaque trame comporte moins un.

Pour le transport desdits paquets et desdites cellules, chaque trame peut comporter plusieurs groupes d'intervalles de temps. Mais, elle peut comporter un unique groupe d'intervalles de temps soit qui occupe tous les intervalles de temps disponibles de chaque trame, soit qui n'occupe que partiellement les intervalles de temps disponibles de chaque trame.

Ledit ou chaque groupe peut également être subdivisé en sous-groupes non-consécutifs d'intervalles de temps.

La présente invention concerne également un équipement d'extrémité de liaisons de transport de paquets à longueur variable tels que des paquets AAL2 et, éventuellement, de cellules telles que des cellules ATM et ce, au moyen de trames de circuits virtuels conformément à un procédé de transport tel qu'il vient d'être exposé. De plus, ledit équipement est destiné à traiter lesdits paquets en relation avec des cellules identifiées par un identificateur de conduit virtuel et un identificateur de circuit virtuel.

Selon la présente invention, il comporte une table de correspondance entre l'adresse de circuit virtuel desdits paquets et les identificateurs de conduit virtuel et circuit virtuel desdites cellules.

Par exemple, ledit équipement est un multiplexeur/démultiplexeur comportant, côté démultiplexé, une pluralité de ports pour des liaisons de transport par trames de circuits virtuels et, côté multiplexé, un port pour des liaisons de transport par cellules ATM.

Mais il peut également s'agir d'un multiplexeur/démultiplexeur comportant, côté démultiplexé, une pluralité de ports bidirectionnels pour des liaisons de transport par trames de circuits virtuels et, côté multiplexé, un port bidirectionnel pour des liaisons de transport par trames de circuits virtuels.

Selon une autre caractéristique de l'invention, cet équipement comporte des moyens de traduction des adresses de connexion portées par les paquets à longueur variable de manière à concentrer les flux de trafic présents sur les ports côté multiplexé.

Les identificateurs de conduit virtuel et de circuit virtuel sont affectés selon le type de connexion concernée.

Enfin, la présente invention concerne également des trames de circuits temporels découpées chacune en une pluralité d'intervalles de temps occupés chacun par un octet qui sont caractérisées en ce qu'elles sont destinées à transporter des paquets à longueur variable tels que des paquets AAL2 et, éventuellement des cellules telles que des cellules ATM conformément à un procédé de transport tel qu'il vient d'être exposé.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est un diagramme montrant le format d'un paquet AAL2,
La Fig. 2 est un diagramme illustrant le multiplexage de cellules ATM sur une structure de trames à circuits temporels de type E1 qui utilise tous les intervalles de temps desdites trames,
La Fig. 3 est un diagramme illustrant le multiplexage de cellules ATM sur une structure de trames à circuits temporels de type E1 qui n'utilise que partiellement tous les intervalles de temps desdites trames,
La Fig. 4 est un diagramme illustrant le multiplexage de paquets AAL2 dans des trames à circuits temporels de type E1 conformément à la présente invention et ce, en utilisant tous les intervalles de temps desdites trames,
La Fig. 5 est un diagramme illustrant le multiplexage de paquets AAL2 dans des trames à circuits temporels de type E1 conformément à la présente invention, le groupe d'intervalles de temps utilisés n'utilisant que partiellement les intervalles de temps desdites trames,

La Fig. 6 est un diagramme illustrant le multiplexage de paquets AAL2 dans des trames à circuits temporels de type E1 conformément à la présente invention et ce, en utilisant deux groupes d'intervalles de temps,

La Fig. 7 est un diagramme illustrant le format de l'octet de pointage qui est utilisé pour l'insertion de paquets AAL2 conformément à la présente invention, et

La Fig. 8 est un diagramme illustrant le multiplexage de paquets AAL2 et de cellules ATM dans des trames à circuits temporels de type E1 conformément à la présente invention et ce, en utilisant une adresse de circuit virtuel.

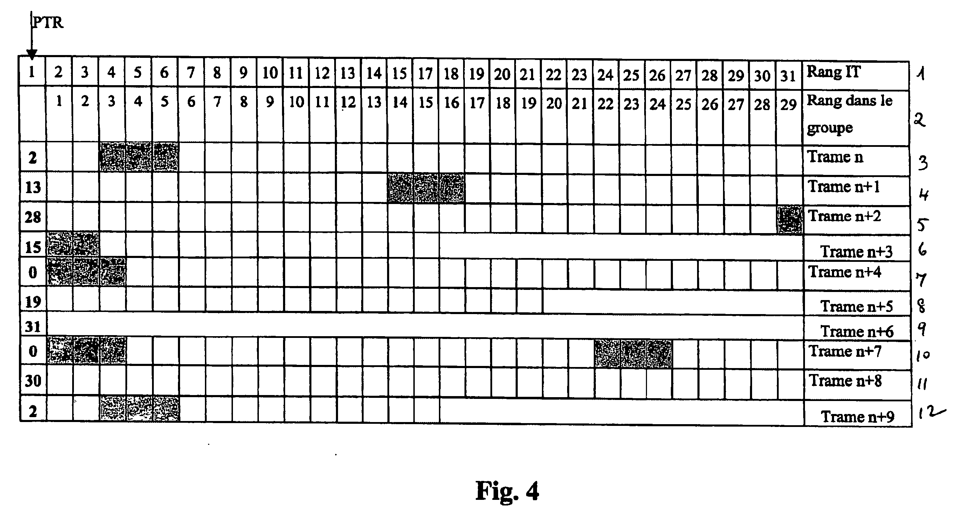

A la Fig. 4, on a représenté un exemple de multiplexage de paquets AAL2 directement dans les intervalles de temps IT d'une trame de circuits temporels, par exemple du type E1/T1, conformément au procédé de la présente invention et ce, en utilisant tous les intervalles de temps IT disponibles dans chaque trame (tous les intervalles de temps à l'exception des intervalles de rang 0 et 16 par ailleurs utilisés). Ces intervalles de temps forment entre eux ce que l'on appelle dans la présente description un groupe, notamment un groupe d'intervalles de temps utilisés. On a représenté en grisé l'en-tête de trois octets de chaque paquet AAL2, les autres octets étant cloisonnés entre eux. Les octets vides ne sont quant à eux pas cloisonnés.

On rappelle que les paquets AAL2 ont le format qui est représenté à la Fig. 1 et que par conséquent, leur en-tête comporte entre autre un identificateur de connexion CID.

Un intervalle de temps spécifique de chaque groupe d'intervalles utilisés, en l'occurrence celui de rang 1 du groupe, est pourvu d'un pointeur PTR pointant l'intervalle de temps qui contient l'en-tête du premier paquet AAL2 contenu dans le groupe d'intervalles de temps utilisés. La valeur donnée à ce pointeur est par exemple le rang dans le groupe d'intervalles utilisés de l'intervalle pointé moins un.

A la Fig. 4, on a indiqué, dans le premier intervalle de temps de chaque trame n à n+9, la valeur que prend le pointeur PTR correspondant. Ainsi, dans la trame n, le premier octet dont la valeur est 2 pointe sur l'intervalle de temps qui contient le premier octet du premier paquet AAL2, soit l'intervalle de temps de rang 3 dans le groupe d'intervalles de temps utilisés. De même, dans la trame n+1, le premier octet dont la valeur est 13 pointe sur l'intervalle de temps qui contient le premier octet du premier paquet AAL2 de la trame, soit l'intervalle de temps de rang 14 dans le groupe d'intervalles de temps utilisés.

Ainsi, de manière générale, la valeur du pointeur PTR est égale au rang dans le groupe du premier octet d'un paquet.

Lorsqu'une trame est partiellement vide et qu'elle ne contient pas d'en-tête complet de paquet AAL2, le pointeur PTR pointe sur le premier octet vide (cas des trames n+3 et n+5) où la valeur du pointeur est respectivement 15 et 19 pour pointer les intervalles de temps de rang 16 et 20 dans le groupe d'intervalles de temps utilisés. Par contre, lorsque la trame est partiellement vide mais qu'elle contient un en-tête complet de paquet, le cas général s'applique si bien que la valeur du pointeur est égale au rang dans le groupe du premier octet d'un paquet (cas de la trame n+9 où la valeur du pointeur est 2 pour pointer l'intervalle de temps de rang 3 dans le groupe d'intervalles de temps utilisés).

Lorsque la trame est complètement vide, la valeur du pointeur prend une valeur significative, en l'occurrence 31 (cas de la trame n+6). Par exemple, le premier paquet AAL2 qui se présente après une telle trame est cadré sur l'octet qui suit l'octet contenant le pointeur PTR, si bien que le pointeur PTR prend la valeur nulle (cas de la trame n+7).

Une valeur nulle indique que le paquet AAL2 contenu dans la trame a son premier octet dans l'intervalle de temps qui suit directement le premier intervalle de temps de la trame (cas de la trame n+4). Une valeur égale à 30 signifie que la trame contient 29 octets d'un paquet (tous les intervalles de temps du groupe des intervalles de temps utilisés) ayant commencé dans la trame précédente (cas de la trame n+8).

On notera que corrélativement au transport de paquets AAL2, les trames peuvent également être utilisées pour le transport de cellules ATM. Le principe de pointage sur les paquets AAL2 est également mis en oeuvre pour les cellules ATM.

Dans l'exemple illustré ci-dessus, on a considéré le cas où toute la bande est assignée au transport d'informations AAL2 ou ATM ou, en d'autres termes, que tous les intervalles de temps disponibles de la trame (ce que l'on a nommé le groupe d'intervalles utilisés) sont affectés au transport de paquets AAL2 et à des cellules ATM.

Selon une autre caractéristique de la présente invention, chaque groupe d'intervalles de temps utilisés peut être subdivisé en sous-groupes non-consécutifs d'intervalles de temps. Ainsi, il est possible de fractionner la bande réservée au transport de paquets AAL2 et aux cellules ATM en n'utilisant qu'une partie des 30 intervalles de temps IT. Les sous-groupes peuvent avoir des tailles différentes.

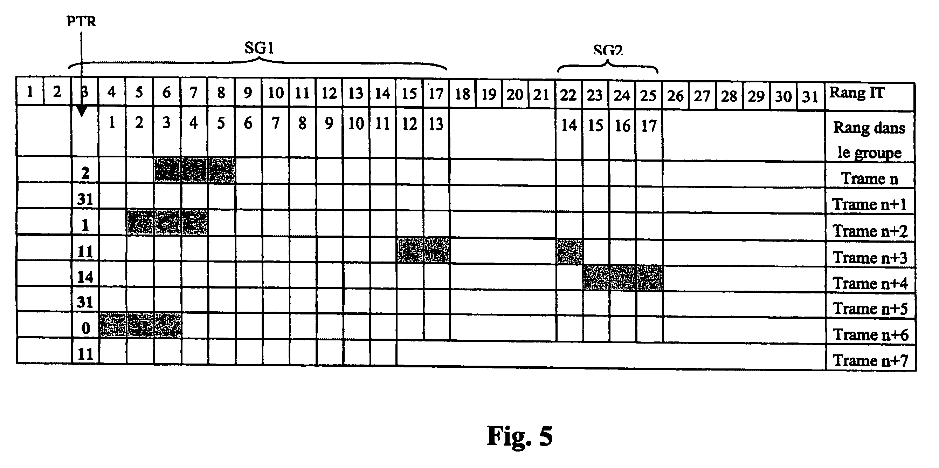

A la Fig. 5, on a représenté un exemple de multiplexage de paquets AAL2 directement dans les intervalles de temps IT d'une trame de circuits temporels conformément au procédé de la présente invention et ce, en n'utilisant qu'un groupe d'intervalles de temps subdivisé en deux sous-groupes SG1 et SG2 d'intervalles de temps IT. Dans cet exemple, les intervalles de temps du premier sous-groupe SG1 sont les intervalles de temps de rang compris entre 3 et 17, alors que les intervalles de temps du second sous-groupe SG2 sont les intervalles de temps de rang compris entre 22 et 25. A l'instar de la Fig. 4, on a représenté en grisé l'en-tête de trois octets de chaque paquet AAL2. De même, alors que tous les octets de chaque paquet AAL2 sont cloisonnés entre eux, les octets non utilisés pour le transport de paquets AAL2 ou de cellules ATM ne le sont pas.

Le principe de pointage est identique à celui appliqué à la Fig. 4. On peut constater que le pointeur PTR est contenu dans le premier octet du groupe d'intervalles de temps affectés au transport des paquets AAL2 et aux cellules ATM, en l'occurrence le premier octet du sous-groupe SG1 précédant le premier octet utile dans l'intervalle de temps de rang 4. Ici, on appelle groupe d'intervalles de temps utilisés la combinaison des sous-groupes SG1 et SG2. Le pointeur PTR pointe l'intervalle de temps du groupe qui contient l'en-tête du premier paquet AAL2 contenu dans la trame et sa valeur est le rang dans le groupe de l'intervalle de temps pointé moins un (par exemple, dans la trame n+3, l'intervalle de temps du premier octet de l'en-tête du paquet occupe le rang 15 dans la trame, mais le rang 12 dans le groupe et la valeur du pointeur est donc 12-1=11). En ce qui concerne les valeurs spécifiques attribuées à ce pointeur, elles sont les mêmes que précédemment. Ainsi, le principe de pointage est identique à celui qui a été précédemment exposé en relation avec la Fig. 4 à l'exception du fait que le pointeur PTR ne peut pas pointer des intervalles de temps non-affectés au transport des paquets AAL2, tels que les intervalles de temps de rang dans la trame 1 et 2, 18 à 21 et 26 à 31.

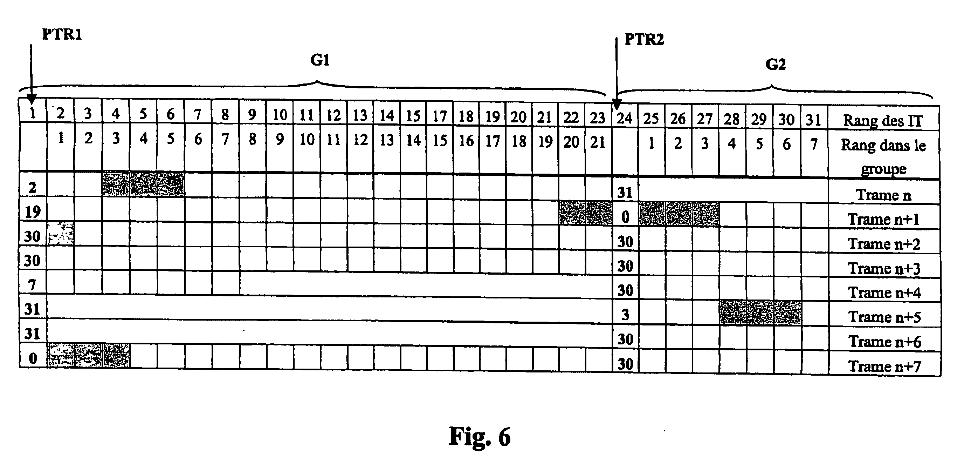

A la Fig. 6, on a représenté un autre exemple de multiplexage de paquets AAL2 directement dans les intervalles de temps IT d'une trame de circuit qui sont assignés à cet effet. Ici, deux groupes G1 et G2 d'intervalles de temps sont en réalité assignés pour le transport des paquets AAL2. Ces deux groupes G1 et G2 occupent la totalité des intervalles de temps disponibles de la trame, mais cela pourrait ne pas être. De plus, dans certains modes de réalisation, ces groupes pourraient également être subdivisés en sous-groupes non-consécutifs d'intervalles de temps, à l'instar des sous-groupes SG1 et SG2 représentés à la Fig. 5. Enfin, on notera que les intervalles disponibles de la trame pourraient être divisés en plus de deux groupes.

A la Fig. 6, le premier groupe G1 s'étend des intervalles de temps de rang dans la trame 1 à 23, alors que le second groupe G2 s'étend des intervalles de temps de rang 24 à 31 dans la trame. Le premier intervalle de temps de chaque groupe est utilisé pour le pointeur PTR1, PTR2. Chaque groupe G1, G2 est indépendant. De ce fait, le paquet AAL2 du premier groupe G1 dont le premier octet se trouve dans l'intervalle de temps de rang dans la trame égal à 4 (rang 3 du groupe G1) de la trame n s'étend jusqu'à l'intervalle de temps de rang dans la trame égal à 23 (rang 21 du groupe G1) de la même trame n, puis recommence à l'intervalle de temps de rang 2 de la trame n+1 (rang 1 du groupe G1) pour terminer à l'intervalle de temps de rang 21 de la même trame n+1 (rang 19 du groupe G1), comme cela peut être déduit de la valeur 19 de son pointeur PTR1. De même, le paquet AAL2 du second groupe G2 dont le premier octet se trouve dans l'intervalle de temps de rang 25 de la trame n+1 (rang 1 du groupe G2) s'étend jusqu'à l'intervalle de temps de rang 31 de la même trame n+1 (rang 7 du groupe G2), puis recommence à l'intervalle de temps de rang 25 de la trame n+2, s'étend jusqu'à l'intervalle de temps de rang 31 de la même trame n+2, puis recommence à l'intervalle de temps de rang 25 des trames n+3 et n+4, s'étend jusqu'à l'intervalle de temps de rang 31 des mêmes trames n+3 et n+4, puis recommence à l'intervalle de temps de rang 25 de la trame n+5 pour terminer à l'intervalle de temps de rang 27 de la même trame n+5 (rang 3 du groupe G2), comme cela peut être déduit de la valeur 3 de son pointeur.

Comme dans les exemples précédents, une valeur nulle du pointeur PTR1, PTR2 indique que le paquet AAL2 pointé a son premier octet dans l'intervalle de temps qui suit directement le premier intervalle de temps du groupe G1, G2. Une valeur égale à 30 signifie que les intervalles de temps du groupe correspondant G1, G2 contiennent les octets restants d'un paquet ayant commencé dans les intervalles de temps du même groupe de la trame précédente. La valeur 31 signifie que les intervalles de temps qui appartiennent au groupe G1, G2 correspondant est vide. Le premier paquet AAL2 qui se présente après est cadré sur l'octet qui suit l'octet contenant le pointeur PTR1, PTR2, si bien que le pointeur PTR1, PTR2 prend la valeur nulle. Par ailleurs, lorsqu'il n'y a pas d'en-tête complet de paquet AAL2 dans un groupe mais des octets vides, le pointeur PTR1, PTR2 pointe sur le premier octet vide.

L'assignation des intervalles de temps IT et la découpe en groupes et sous-groupes de ces intervalles de temps sont par exemple effectuées par le gestionnaire du réseau de manière semi-permanente. C'est une opération de type dimensionnement de réseau qui n'a pas un caractère définitif, mais qui peut être modifiée en fonction de différents paramètres, tels des profils ou des natures de trafics. Le tableau ci-dessous montre un exemple de table d'assignation des intervalles de temps IT dans laquelle la trame E1 est découpée en 2 groupes d'intervalles de temps indépendants G1 et G2.

Les croix indiquent les intervalles de temps qui sont réservés au système de trames. Les 1 indiquent une affectation au groupe correspondant. Quant aux 0, ils indiquent que l'intervalle de temps n'est pas affecté au groupe correspondant.

On peut constater que le groupe G1 contient les intervalles de temps IT 3,4,5,6,7,8,9 et que le groupe G2 contient les intervalles de temps IT 14 à 31, 16 exclus. Quant aux intervalles de temps IT 1,2,10,11,12,13, ils ne sont pas affectés au transport de trafics ATM.

|  | G1 | G2 |  | G1 | G2 |  | G1 | G2 |  | G1 | G2 |
|---|---|---|---|---|---|---|---|---|---|---|---|
| 0 | X | X | 8 | 1 | 0 | 16 | X | X | 24 | 0 | 1 |

(suite)

| | G1 | G2 | | G1 | G2 | | G1 | G2 | | G1 | G2 |
|---|---|---|---|---|---|---|---|---|---|---|---|
| 1 | 0 | 0 | 9 | 1 | 0 | 17 | 0 | 1 | 25 | 0 | 1 |
| 2 | 0 | 0 | 10 | 0 | 0 | 18 | 0 | 1 | 26 | 0 | 1 |
| 3 | 1 | 0 | 11 | 0 | 0 | 19 | 0 | 1 | 27 | 0 | 1 |
| 4 | 1 | 0 | 12 | 1 | 1 | 20 | 0 | 1 | 28 | 0 | 1 |
| 5 | 1 | 0 | 13 | 0 | 0 | 21 | 0 | 1 | 29 | 0 | 1 |
| 6 | 1 | 0 | 14 | 0 | 1 | 22 | 0 | 1 | 30 | 0 | 1 |
| 7 | 1 | 0 | 15 | 0 | 1 | 23 | 0 | 1 | 31 | 0 | 1 |

On notera que cette assignation des intervalles de temps IT et cette découpe en groupes et sous-groupes de ces intervalles de temps sont identiques dans les deux sens de transport de la liaison par trames de circuits temporels envisagée : sens montant et sens descendant.

De manière générale, dans le cas d'une trame de 30 intervalles de temps IT utiles, la valeur du pointeur PTR ne dépasse pas la valeur 31, si bien que 5 bits suffisent pour le coder. Si le pointeur PTR est logé dans un octet, il reste 3 bits qui peuvent être exploités pour coder une adresse de circuit virtuel VC que l'on appelle par la suite adresse AdVC.

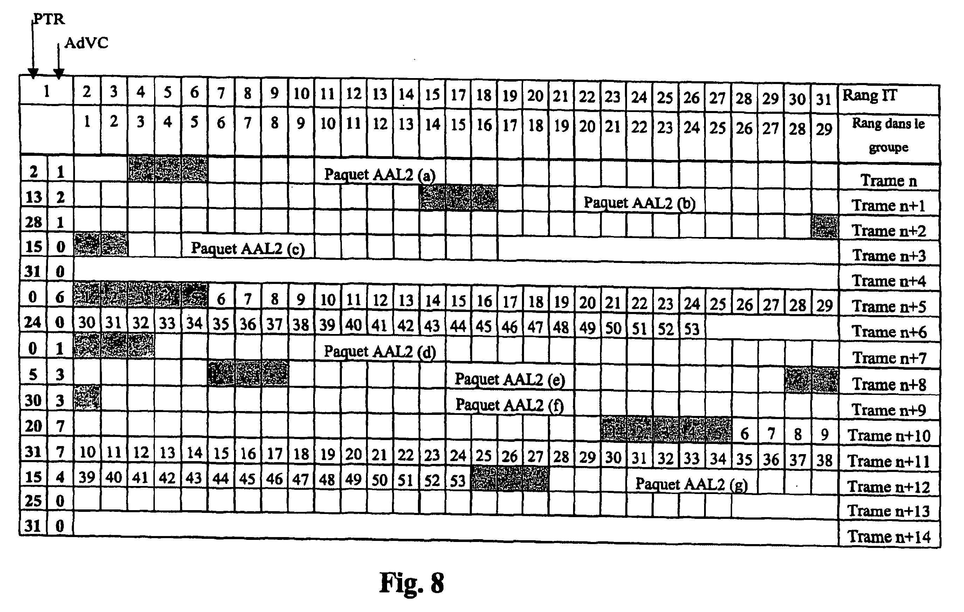

On a représenté à la Fig. 7 le format de l'octet de pointage qui est donc constitué du pointeur PTR (sur cinq bits) et de l'adresse de circuit virtuel AdVC (sur trois bits). On donne ci-après la signification de cette adresse de circuit virtuel AdVC dont la valeur dépend essentiellement du circuit virtuel de transport considéré.

La valeur 0 de l'adresse AdVC est utilisée pour indiquer que la trame est vide (ne contient aucune donnée) ou que, compte tenu de ce qu'on vient de dire, le pointeur PTR pointe un intervalle de temps vide. Les 7 autres valeurs d'adresse AdVC restantes ($2^3-1$) sont respectivement assignées à des circuits virtuels particuliers. Cette adresse peut également être utilisée pour différencier deux circuits virtuels par le type de transport qu'ils permettent, par exemple, un type de circuit virtuel destiné au transport de la voix aux moyens de paquets AAL2, un type de circuit virtuel destiné au transport de données aux moyens de paquets AAL2, un type de circuit virtuel le transport de cellules ATM, etc. Elle pourrait également adresser un circuit virtuel de signalisation destiné au transport des informations de signalisation de contrôle au moyen de paquets AAL5 contenus dans des cellules ATM.

L'adresse AdVC est associée au paquet AAL2 qui est pointé par le pointeur PTR. Par conséquent, tous les paquets AAL2 qui ont des en-têtes dans une même trame possèdent la même adresse AdVC. Ils sont donc transportés dans le même circuit virtuel VC.

A la Fig. 8, on a représenté un exemple de multiplexage de paquets AAL2 et de cellules ATM dans des trames de circuits virtuels n à n+14 en utilisant les mêmes principes de pointage que ceux utilisés à la Fig. 4 : il n'y a qu'un groupe d'intervalles de temps qui est utilisé pour le transport, ce groupe est constitué de tous les intervalles de temps disponibles de la trame et il n'est pas subdivisé en sous-groupes. Par rapport à la Fig. 4, on a reporté, à côté de la valeur du pointeur PTR, la valeur de l'adresse de circuit virtuel AdVC. Cette valeur d'adresse de circuit virtuel AdVC est par exemple assignée aux circuits virtuels de la manière qui est exposée dans la table ci-dessous.

| AdVC | Caractéristiques |
|---|---|
| 1 | VC de transport de paquets AAL2 (voix) |
| 2 | VC de transport de paquets AAL2 (données) |
| 3 | VC de transport de paquets AAL2 (voix) |
| 4 | VC de transport de paquets AAL2 (données) |
| 5 | Inutilisé |
| 6 | VC de transport de cellules ATM (données sur AAL5) |
| 7 | VC de signalisation |

D'après cette définition et les valeurs de l'adresse AdVC de la Fig. 8, on peut constater que les paquets (a), (c) et (d) sont transportés dans le même circuit virtuel dont l'adresse AdVC est égale à 1. Le paquet (b) est le seul qui est transport dans le circuit virtuel d'adresse AdVC égale à 2. Les paquets AAL2 (e) et (f) sont transportés dans le même circuit virtuel dont l'adresse AdVC est égale à 3. Quant au paquet (g), il est transporté dans le circuit virtuel d'adresse AdVC égale à 4.

On peut également constater que les valeurs 0 des adresses AdVC concernent des intervalles de temps vides.

On a également représenté 2 cellules ATM repérées par leur numérotation de 1 à 53 de leurs octets, les cinq premiers octets 1 à 5 étant grisés pour représenter leur en-tête. Une de ces cellules ATM appartient au canal d'adresse AdVC égale à 6, alors que l'autre appartient au canal d'adresse AdVC égale à 7.

On notera qu'un paquet AAL2 et une cellule ATM peuvent être multiplexés dans une même trame à condition que le premier octet de leurs en-têtes ne soit pas contenu dans la même trame.

Dans des équipements d'extrémité qui traitent les paquets AAL2, soit en les extrayant au préalable de cellules ATM, soit en les insérant après traitement dans des cellules ATM à fin de transmission, et pour que soient alloués aux paquets AAL2 et aux cellules ATM transportés dans les trames de circuits temporels des circuits virtuels VC d'adresse de circuit virtuel AdVC correspondant aux circuits virtuels de transport ATM d'identificateur de conduit virtuel VPI et d'identificateur de circuit virtuel VCI, on a prévu des tables de correspondance qui établissent un lien entre, d'une part, les identificateurs de circuits virtuels qui sont utilisés par ces cellules ATM et, d'autre part, les adresses de circuit virtuel AdVC utilisées pour le transport dans les trames de circuits temporels. Ces tables sont par exemple localisées dans ces équipements d'extrémité de traitement des paquets AAL2. Une telle table pourrait avoir le format donné dans la table ci-dessous suivant, en relation avec l'exemple ci-dessus donné pour illustrer la Fig. 8.

| AdVC | VPI | VCI | Caractéristiques |
|------|-----|-----|------------------|
| 1 | 0 | 200 | VC de transport de paquets AAL2 (voix) |
| 2 | 0 | 210 | VC de transport de paquets AAL2 (données) |
| 3 | 0 | 50 | VC de transport de paquets AAL2 (voix) |
| 4 | 0 | 60 | VC de transport de paquets AAL2 (données) |
| 5 | | | Inutilisé |
| 6 | 10 | 100 | VC de transport de cellules ATM (données sur AAL5) |
| 7 | 0 | 5 | VC de signalisation |

Ainsi, les 6 paquets AAL2 transportés par les 14 trames n à n+14, sont identifiés de la manière suivante :

- Paquet AAL2 (a) : AdVC=1 (VPI 0, VCI 200), CID= 100
- Paquet AAL2 (b) : AdVC=2 (VPI 0, VCI 210), CID=80
- Paquet AAL2 (c) : AdVC=1 (VPI 0, VCI 200), CID= 110
- Paquet AAL2 (d) : AdVC=1 (VPI 0, VCI 200), CID= 100
- Paquet AAL2 (e) : AdVC=3 (VPI 0, VCI 50), CID=55
- Paquet AAL2 (f): AdVC=3 (VPI 0, VCI 50), CID=28
- Paquet AAL2 (g) : AdVC=4 (VPI 0, VCI 60), CID=65

Le tableau ci-dessous montre un autre exemple de table de traduction dans le cas où le transport est effectué en deux groupes d'intervalles de temps G1 et G2 selon les principes exposés en relation avec la Fig. 6.

| | AdVC | VPI | VCI | Type de transport |
|---|---|---|---|---|
| | 1 | 0 | 100 | AAL2 |
| | 2 | 0 | 101 | AAL2 |
| | 3 | 0 | 102 | AAL2 |
| G1 | 4 | 0 | 103 | AAL2 |
| | 5 | 0 | 200 | AAL5 |
| | 6 | 0 | 201 | AAL5 |
| | 7 | 0 | 202 | AAL5 |
| | 1 | 1 | 100 | AAL2 |
| G2 | 2 | 1 | 101 | AAL2 |
| | 7 | 1 | 200 | AAL5 |

Dans cet exemple, le groupe d'intervalles de temps G1 est alloué au transport de paquets AAL2 dans 4 circuits virtuels d'adresses AdVC 1 à 4 et au transport de paquets AAL5 dans 3 circuits virtuels d'adresses AdVC 5 à 7. Quant au groupe G2, il est alloué au transport de paquets AAL2 dans 2 circuits virtuels d'adresses AdVC 1 et 2 et au transport de paquets AAL5 dans un circuit virtuel d'adresse AdVC 7. A ces adresses correspondent des identificateurs de conduit et de circuit virtuel ATM (VPI/VCI). On notera que dans chaque circuit virtuel utilisé pour le transport de paquets AAL2, peuvent être affectées au maximum 248 connexions identifiées par l'identificateur CID (lequel comporte 8 bits, soit 255 valeurs possibles, mais 7 sont réservées, soit 255 - 7 = 248).

Comme on vient de le voir, chaque groupe d'intervalles de temps utilisés (par exemple les groupes G1 et G2) peut contenir un certain nombre de circuits virtuels pour le transport de connexions AAL2 et ATM, circuits virtuels discriminés au moyen de l'adresse AdVC. Ce nombre dépend du nombre de valeurs que peut prendre cette adresse, soit dans le cas de l'exemple de réalisation donné ci-dessus $2^3 - 1 = 7$. Il est cependant nécessaire que les circuits virtuels côté ATM soient tous différents d'un groupe à l'autre. Ainsi, dans l'exemple de la Fig. 8, si l'adresse de circuit virtuel AdVC=2 du groupe G1 est traduite en VPI=0 et VCI=100, la même adresse de circuit virtuel AdVC=2 du groupe G2 ne pourra pas être traduit en VPI=0 VCI=100.

Parmi les équipements d'extrémité ci-dessus, on peut citer un équipement de multiplexage/démultiplexage trames de circuits/ATM, comportant donc, côté démultiplexé, des ports bidirectionnels pour des liaisons de transport par trames de circuits temporels et, côté multiplexé, un port, également bidirectionnel, pour une liaison de transport par cellules ATM.

Plus spécifiquement et à titre d'exemple, on considère un équipement de multiplexage/démultiplexage trames de circuits/ATM ayant, d'une part, 5 ports bidirectionnels pour des liaisons de transport par trames de circuits temporels (A,B,C,D et E) et, d'autre part, un port, également bidirectionnel, pour une liaison de transport par cellules ATM (M) et on donne ci-dessous un exemple de table de correspondance entre les adresses de circuits virtuels AdVC et les identificateurs VPI/VCI pour chaque multiplex E1.

| Port | AdVC | VPI | VCI | Type de connexion |
|---|---|---|---|---|
| A | 1 | 10 | 100 | AAL2 |
| | 2 | 10 | 101 | AAL2 |
| | 7 | 10 | 5 | AAL5 |
| B | 1 | 20 | 100 | AAL2 |
| | 2 | 20 | 101 | AAL2 |
| | 7 | 20 | 5 | AAL5 |

(suite)

| Port | AdVC | VPI | VCI | Type de connexion |
|------|------|-----|-----|-------------------|
| C | 1 | 30 | 100 | AAL2 |
| | 2 | 30 | 101 | AAL2 |
| | 7 | 30 | 5 | AAL5 |
| D | 7 | 40 | 5 | AAL5 |
| E | 1 | 50 | 100 | AAL2 |
| | 7 | 50 | 5 | AAL5 |

On a représenté ci-dessous un exemple de table d'aiguillage des connexions AAL2 dans le multiplexeur/démultiplexeur donné à titre d'exemple ci-dessus.

| Cx | Port | AdVC | CID | Port | VPI | VCI | CID |
|----|------|------|-----|------|-----|-----|-----|
| 1 | A | 1 | 40 | M | 10 | 100 | 40 |
| 2 | A | 1 | 41 | M | 10 | 100 | 41 |
| 3 | A | 1 | 42 | M | 10 | 100 | 42 |
| 4 | A | 2 | 40 | M | 10 | 101 | 40 |
| 5 | A | 2 | 50 | M | 10 | 101 | 50 |
| 6 | A | 2 | 60 | M | 10 | 101 | 60 |
| 7 | A | 2 | 70 | M | 10 | 101 | 70 |
| 8 | B | 1 | 30 | M | 20 | 100 | 30 |
| 9 | B | 2 | 30 | M | 20 | 101 | 30 |
| 10 | B | 2 | 31 | M | 20 | 101 | 31 |
| 11 | B | 2 | 32 | M | 20 | 101 | 32 |
| 12 | C | 1 | 40 | M | 30 | 100 | 40 |
| 13 | C | 1 | 41 | M | 30 | 101 | 41 |
| 14 | E | 1 | 100 | M | 50 | 100 | 100 |
| 15 | E | 1 | 101 | M | 50 | 100 | 101 |
| 16 | E | 1 | 102 | M | 50 | 100 | 102 |
| 17 | E | 1 | 103 | M | 50 | 100 | 103 |

On peut constater l'absence de concentration. On trouve sur le multiplex M du multiplexeur toutes les connexions ATM présentes sur l'ensemble des liens E1, c'est-à-dire 7 circuits virtuels de transport de paquets AAL2 et 5 circuits virtuels de transport de paquets de type AAL5.

On donne ci-dessous un autre exemple de table de correspondance entre les adresses de circuits virtuels AdVC et les identificateurs VPWCI pour chaque multiplex E1 aboutissant au multiplexeur/démultiplexeur ci-dessus.

| Port | AdVC | VPI | VCI | Type de connexion |
|------|------|-----|-----|-------------------|
| A | 1 | 0 | 100 | AAL2 |
| | 2 | 0 | 101 | AAL2 |
| | 7 | 10 | 5 | AAL5 |

(suite)

| Port | AdVC | VPI | VCI | Type de connexion |
|------|------|-----|-----|-------------------|
| B | 1 | 0 | 100 | AAL2 |
| | 2 | 0 | 101 | AAL2 |
| | 7 | 20 | 5 | AAL5 |
| C | 1 | 0 | 100 | AAL2 |
| | 2 | 0 | 101 | AAL2 |
| | 7 | 30 | 5 | AAL5 |
| D | 7 | 40 | 5 | AAL5 |
| E | 1 | 0 | 100 | AAL2 |
| | 7 | 50 | 5 | AAL5 |

La table ci-dessous représente un exemple de table d'aiguillage et de traduction des connexions AAL2. On notera que les identificateurs de connexions CID sont nécessairement traduits. Cette table est mise à jour au cours des phases d'établissement des connexions AAL2. L'équipement de concentration réalise des fonctions de commutation de paquets AAL2 et à ce titre, il doit gérer le protocole de signalisation AAL2 (recommandation IUT Q.2630.2).

| Cx | Port | AdVC | CID | Port | VPI | VCI | CID |
|----|------|------|-----|------|-----|-----|-----|
| 1 | A | 1 | 40 | M | 0 | 100 | 200 |
| 2 | A | 1 | 41 | M | 0 | 100 | 201 |
| 3 | A | 1 | 42 | M | 0 | 100 | 202 |
| 4 | A | 2 | 40 | M | 0 | 101 | 200 |
| 5 | A | 2 | 50 | M | 0 | 101 | 201 |
| 6 | A | 2 | 60 | M | 0 | 101 | 202 |
| 7 | A | 2 | 70 | M | 0 | 101 | 203 |
| 8 | B | 1 | 30 | M | 0 | 100 | 203 |
| 9 | B | 2 | 30 | M | 0 | 101 | 204 |
| 10 | B | 2 | 31 | M | 0 | 101 | 205 |
| 11 | B | 2 | 32 | M | 0 | 101 | 206 |
| 12 | C | 1 | 40 | M | 0 | 100 | 204 |
| 13 | C | 1 | 41 | M | 0 | 101 | 207 |
| 14 | E | 1 | 100 | M | 0 | 100 | 205 |
| 15 | E | 1 | 101 | M | 0 | 100 | 206 |
| 16 | E | 1 | 102 | M | 0 | 100 | 207 |
| 17 | E | 1 | 103 | M | 0 | 100 | 208 |

Dans cette configuration, les flux de trafics sont par exemple concentrés par types de qualité de service, par exemple en fonction de contraintes temps réel ou de contraintes en terme de taux de perte. On considère, par exemple, que pour les ports A, B et C, un canal AAL2 est réservé aux flux à contrainte temps réel et un canal AAL2 est réservé aux flux sans contrainte temporelle. Le port E transporte un seul flux sans contrainte de temps. Ces flux sont concentrés en sortie M sur 2 circuits virtuels de transport. Par exemple, le circuit virtuel (VP1=0, VCI=100) est réservé aux flux temps réel et le circuit virtuel (VPI=0, VCI=101) aux flux non temps réel. Cette opération permet de réaliser un gain statistique en assurant un remplissage optimal des cellules ATM de transport.

Une autre solution consisterait à concentrer tous les flux dans un même circuit virtuel apportant un gain statistique encore plus important. La contrepartie est que ce circuit virtuel VC doit supporter une qualité de service QoS qui puisse satisfaire à la fois les contraintes liées au transport des trafics voix et des trafics de données, c'est-à-dire à forte contrainte de temps réel et à faible taux de perte.

Parmi les équipements d'extrémité ci-dessus, on peut encore citer un équipement de multiplexage/démultiplexage comportant, côté démultiplexé, des ports bidirectionnels pour des liaisons de transport par trames de circuits temporels et, côté multiplexé, un port, également bidirectionnel et pour une liaison de transport par trames de circuits temporels. Plus spécifiquement et à titre d'exemple, on considère maintenant un équipement de multiplexage/démultiplexage comportant, côté multiplexé, trois ports (A, B, C) pour des liaisons de transport par trames de circuits virtuels support des trafics AAL2 et, côté démultiplexé, un port E pour une liaison de transport par trames de circuits virtuels. Ceci n'est évidemment possible que si le nombre d'intervalles de temps IT utilisés sur les trois liaisons côté démultiplexé est inférieur ou égal au nombre d'intervalles de temps IT disponibles sur l'unique liaison côté multiplexé. Un tel équipement gère des ports de liaisons pour le transport par trames de circuits virtuels mais en interne, il traite des unités de données de type paquets AAL2.

Un exemple de table de traduction des adresses de circuits virtuels AdVC est donné ci-dessous.

| Port de liaisons démultiplexées | AdVC | Port de liaisons multiplexées | AdVC | Type de connexion |
|---|---|---|---|---|
| A | 1 | E | 1 | AAL2 |
| A | 2 | E | 2 | AAL2 |
| A | 7 | E | 7 | AAL5 |
| B | 1 | E | 3 | AAL2 |
| B | 2 | E | 4 | AAL2 |
| B | 7 | E | 6 | AAL5 |
| C | 1 | E | 5 | AAL2 |

On montre ci-dessous l'avantage du principe de la présente invention prévoyant le transport des paquets AAL2 sur des liens de transport par trames de circuits virtuels, par exemple de type E1, par rapport à la technique de ce transport par des cellules ATM sur des liens de transport par trames de circuits virtuels, par exemple de type E1. Les calculs qui suivent sont fondés sur des hypothèses volontairement simples dans une configuration de réseau d'accès UTRAN sur l'interface lub qui relie une station de base Node B à un contrôleur de réseau mobile RNC. Ces hypothèses sont les suivantes :

1) On considère des blocs de données de 31 octets issus de communications de parole codée en AMR au débit de 12,2 kb/s avec des intervalles de temps de 20ms. Le paquet AAL2 qui en résulte a une longueur de 42 octets, les 9 octets supplémentaires étant constitués de 3 octets d'en-tête et de 6 octets d'encapsulation des couches de protocoles radio. Il s'agit plus précisément du sens montant. Dans le sens descendant, le paquet AAL2 résultant ne ferait plus que 40 octets.

2) La trame E1 est chargée à 100 % : les 30 intervalles de temps IT sont utilisés en un seul groupe (un seul intervalle de pointage).

**Premier cas :** les paquets AAL2 sont insérés dans la trame E1 consécutivement comme le montre la Fig. 4. Le nombre de trames T nécessaires pour transporter M paquets de 42 octets est égal à :

$$T = M \times 42/(30 - 1)$$

On notera que chaque trame E1 ne contient que 29 octets utiles (30 octets moins un octet de pointage).

A titre d'exemple, pour transporter 58 paquets AAL2, il faut donc 84 trames. Le rendement est de (58 x 42) / (84 x 30) soit 97 %. Si on tient compte des en-têtes de 3 octets des paquets AAL2, le rendement tombe à 90 %.

**Deuxième cas :** les mêmes paquets sont insérés dans des cellules ATM avec 5 octets de bourrage. Il n'y a donc qu'une seule minicellule de 42 octets par cellule ATM. Le nombre de trames T nécessaires pour transporter C cellules ATM (soit M minicellules de 42 octets) est de

$$T = C \times 53/30,$$

chaque E1 contient 30 octets utiles.

Pour transporter 58 minicellules, il faut 102 trames complètes et 14 intervalles de temps à la dernière trame. Le rendement est de (58 x 42) / (102 x 30) soit 80 %. Si on tient compte des en-têtes de 3 octets des paquets AAL2, le rendement tombe à 74 %.

<u>Troisième cas</u> : les mêmes paquets AAL2 sont insérés dans les cellules ATM avec recouvrement entre trame mais sans octets de bourrage. Le nombre de trames nécessaires pour transporter C cellules est de T = C x 53/30. Pour transporter M minicellules de 42 octets, il faut C cellules de 47 octets, soit C = M x 42/47. Le nombre de trames nécessaires pour transporter M paquets AAL2 de 42 octets est donc T=Mx(42x53) /(30×47). Ainsi, pour M = 58, le nombre de trames T est de 91, à comparer aux 102 trames du 2ème cas ci-dessus. Le rendement est de (58 x 42) / (91 x 30) soit 89 %. Il tombe à 83 % si on tient compte des octets d'en-tête.

En ce qui concerne le transport de l'ATM sur E1, les cas 2 et 3 représentent des configurations extrêmes. La réalité est à placer entre ces deux cas. Bien que le cas du transport de paquets AAL2 sans intervalles de temps IT vides soit un cas favorable, il reste néanmoins plus efficace que le transport de paquets AAL2 sur ATM sur E1 dans les situations de trafics élevés.

Dans les exemples précédents, on a fait le choix du débit de 12,2 kb/s. On notera que le codage AMR prévoit des débits plus faibles. Les longueurs des paquets correspondants sont plus courtes. L'incidence des octets de bourrage devrait donc être plus importante au niveau de la perte des rendements. A titre indicatif, le tableau ci-dessous décrit la longueur des paquets AAL2 pour les différentes valeurs de débits de codage AMR. Les silences font l'objet de la transmission de paquets AAL2 de 13 octets (5 + en-têtes). On notera la différence de 2 octets entre les sens montant et descendant.

| Débits de codage AMR (kb/s) | Tailles des paquets AAL2 sur l'interface Iub montant/descendant | Tailles des paquets AAL2 sur l'interface Iu montant/descendant | TTI |
|---|---|---|---|
| 12,2 | 42/40 | 39/37 | 20ms |
| 10,2 | 37/35 | 34/32 | 20ms |
| 7,95 | 32/30 | 29/27 | 20ms |
| 7,4 | 30/28 | 27/25 | 20ms |
| 6,7 | 29/27 | 26/24 | 20ms |
| 5,9 | 27/25 | 24/22 | 20ms |
| 5,15 | 25/23 | 22/20 | 20ms |
| 4,75 | 24/22 | 21/19 | 20ms |
| Silence | 13/11 | 10/8 | 80ms |

**Revendications**

1. Procédé de transport de paquets à longueur variable tels que des paquets AAL2 et, éventuellement, de transport de cellules telles que des cellules ATM, dans des trames de circuits temporels telles que des trames E1/T1 découpées chacune en une pluralité d'intervalles de temps occupés chacun par un octet, les octets consécutifs de chaque paquet à longueur variable et de chaque cellule se trouvent dans des intervalles de temps consécutifs d'au moins un groupe d'intervalles de temps desdites trames, le premier octet d'un paquet ou d'une cellule étant placé à un intervalle de temps pointé par un pointeur occupant un intervalle de temps spécifique dudit groupe d'intervalles de temps correspondant, **caractérisé en ce qu'**à chaque pointeur est associée une adresse de circuit virtuel définissant un circuit virtuel pour le transport dudit paquet ou de ladite cellule pointé par ledit pointeur ainsi que le ou les paquets ou cellules dans les intervalles de temps de la trame appartenant au même groupe d'intervalles de temps que ledit paquet ou ladite cellule pointé par ledit pointeur.

2. Procédé de transport de paquets selon la revendication 1, **caractérisé en ce que** ledit pointeur et ladite adresse de circuit virtuel sont constitués de bits d'un même octet.

**3.** Procédé de transport de paquets selon la revendication 1 ou 2, **caractérisé en ce que** la valeur du pointeur est égale au rang dans le groupe considéré du premier octet de l'en-tête du paquet correspondant moins un ou, lorsque la trame est partiellement vide et qu'elle ne contient pas d'en-tête de paquet ou pas d'en-tête complet de paquet, au rang dans le groupe considéré du premier octet vide moins un.

**4.** Procédé de transport de paquets selon la revendication 3, **caractérisé en ce que** la valeur du pointeur est nulle lorsque le premier octet dudit paquet ou de ladite cellule se trouve dans l'intervalle de temps qui suit directement celui qui est affecté audit pointeur.

**5.** Procédé de transport de paquets selon la revendication 3 ou 4, **caractérisé en ce que** la valeur du pointeur est égale à une valeur spécifique, par exemple le nombre d'intervalles de temps que chaque trame comporte, lorsque tous les intervalles de temps du groupe correspondant sont vides.

**6.** Procédé de transport de paquets selon une des revendications 3 à 5, **caractérisé en ce que** ladite valeur de pointeur est égale à une valeur spécifique, par exemple, le nombre d'intervalles de temps que chaque trame comporte moins un, lorsque tous les intervalles de temps du groupe sont occupés par les octets d'un paquet ou d'une cellule dont l'en-tête se trouve dans la trame précédente.

**7.** Procédé de transport de paquets selon une des revendications précédentes, **caractérisé en ce que**, pour le transport desdits paquets et desdites cellules, chaque trame comporte plusieurs groupes d'intervalles de temps.

**8.** Procédé de transport de paquets selon une des revendications 1 à 6, **caractérisé en ce que**, pour le transport desdits paquets et desdites cellules, chaque trame comporte un unique groupe d'intervalles de temps qui occupe tous les intervalles de temps disponibles de chaque trame.

**9.** Procédé de transport de paquets selon une des revendications 1 à 6, **caractérisé en ce que**, pour le transport desdits paquets et desdites cellules, chaque trame comporte un unique groupe d'intervalles de temps qui n'occupe que partiellement les intervalles de temps disponibles de chaque trame.

**10.** Procédé de transport de paquets selon une des revendications précédentes, **caractérisé en ce que** ledit ou chaque groupe est subdivisé en sous-groupes non-consécutifs d'intervalles de temps.

**11.** Equipement d'extrémité de liaisons de transport de paquets à longueur variable tels que des paquets AAL2 et, éventuellement, de cellules telles que des cellules ATM et ce, au moyen de trames de circuits virtuels conformément à un procédé de transport selon la revendication 1 ou 2, ledit équipement traitant lesdits paquets en relation avec des cellules identifiées par un identificateur de conduit virtuel et un identificateur de circuit virtuel, **caractérisé en ce qu'**il comporte une table de correspondance entre l'adresse de circuit virtuel desdits paquets ou desdites cellules ainsi transportés, et les identificateurs de conduit virtuel et circuit virtuel desdites cellules.

**12.** Equipement d'extrémité selon la revendication 11, **caractérisé en ce que** ledit équipement est un multiplexeur/démultiplexeur comportant, côté démultiplexé, une pluralité de ports pour des liaisons de transport par trames de circuits virtuels et, côté multiplexé, un port pour des liaisons de transport par cellules ATM.

**13.** Equipement d'extrémité selon la revendication 12, **caractérisé en ce que** ledit équipement est un multiplexeur/démultiplexeur comportant, côté démultiplexé, une pluralité de ports bidirectionnels pour des liaisons de transport par trames de circuits virtuels et, côté multiplexé, un port bidirectionnel pour des liaisons de transport par trames de circuits virtuels.

**14.** Equipement d'extrémité selon la revendication 12 ou 13, **caractérisé en ce qu'**il comporte des moyens de traduction des adresses de connexion portées par les paquets à longueur variable de manière à concentrer les flux de trafic présents sur les ports côté multiplexé.

**15.** Equipement d'extrémité selon une des revendications 11 à 14, **caractérisé en ce que** les identificateurs de conduit virtuel et de circuit virtuel sont affectés selon le type de connexion concernée.

**16.** Trames de circuits temporels découpées chacune en une pluralité d'intervalles de temps occupés chacun par un octet et destinées à transporter des paquets à longueur variable tels que des paquets AAL2 et, éventuellement des cellules telles que des cellules ATM dans des trames de circuits temporels telles que des trames E1/T1 découpées chacune en une pluralité d'intervalles de temps occupés chacun par un octet, les octets consécutifs de chaque paquet à longueur variable et de chaque cellule se trouvent dans des intervalles de temps consécutifs d'au moins un groupe d'intervalles de temps desdites trames, le premier octet d'un paquet ou d'une cellule étant placé à un intervalle de temps pointé par un pointeur occupant un intervalle de temps spécifique dudit groupe d'intervalles de temps correspondant **caractérisé en ce qu**'à chaque pointeur étant associée une adresse de circuit virtuel définissant un circuit virtuel pour le transport dudit paquet ou de ladite cellule pointé par ledit pointeur ainsi que le ou les paquets ou cellules dans les intervalles de temps de la trame appartenant au même groupe d'intervalles de temps que ledit paquet ou ladite cellule pointé par ledit pointeur.

**Claims**

1. Method of transporting packets of variable length such as AAL2 packets and, where appropriate, transporting cells such as ATM cells, in frames of time-division circuits such as E1/T1 frames, each divided into a plurality of time slots, each occupied by one octet, the consecutive octets of each packet of variable length and of each cell being located in consecutive time slots of at least one group of time slots of said frames, the first octet of a packet or of a cell being placed in a time slot pointed to by a pointer occupying a specific time slot of said corresponding group of time slots, **characterized in that** each pointer is assigned a virtual circuit address defining a virtual circuit for the transport of said packet or of said cell pointed to by said pointer and the or each packet or cell in the time slots of the frame belonging to the same group of time slots as said packet or said cell pointed to by said pointer.

2. Method of transporting packets according to Claim 1, **characterized in that** said pointer and said virtual circuit address are made up of bits of one and the same octet.

3. Method of transporting packets according to Claim 1 or 2, **characterized in that** the value of the pointer is equal to the position in the group under consideration of the first octet of the header of the corresponding packet minus one, or, when the frame is partially empty and does not contain a packet header or complete packet header, to the position in the group under consideration of the first empty octet minus one.

4. Method of transporting packets according to Claim 3, **characterized in that** the value of the pointer is zero when the first octet of said packet or of said cell is located in the time slot that directly follows the one assigned to said pointer.

5. Method of transporting packets according to Claim 3 or 4, **characterized in that** the value of the pointer is equal to a specific value, for example the number of time slots contained in each frame, when all the time slots of the corresponding group are empty.

6. Method of transporting packets according to one of Claims 3 to 5, **characterized in that** said pointer value is equal to a specific value, for example, the number of time slots contained in each frame minus one, when all the time slots of the group are occupied by the octets of a packet or of a cell whose header is located in the preceding frame.

7. Method of transporting packets according to one of the preceding claims, **characterized in that**, for the transport of said packets and of said cells, each frame contains several time slot groups.

8. Method of transporting packets according to one of Claims 1 to 6, **characterized in that**, for the transport of said packets and of said cells, each frame contains a single group of time slots that occupies all the available time slots of each frame.

9. Method of transporting packets according to one of Claims 1 to 6, **characterized in that**, for the transport of said packets and of said cells, each frame contains a single group of time slots that only partially occupies the available time slots of each frame.

10. Method of transporting packets according to one of the preceding claims, **characterized in that** said or each group is subdivided into non-consecutive subgroups of time slots.

11. Termination equipment of links for transporting packets of variable length such as AAL2 packets and, where appropriate, cells such as ATM cells and this, by means of virtual circuit frames according to a transport method according to Claim 1 or 2, said equipment processing said packets related to cells identified by a virtual path identifier and a virtual circuit identifier, **characterized in that** it comprises a mapping table between the virtual circuit address of said packets or said cells transported in this way, and the virtual path and virtual circuit identifiers of said cells.

12. Termination equipment according to Claim 11, **characterized in that** said equipment is a multiplexer/demultiplexer comprising, on the demultiplexed side, a plurality of ports for virtual circuit frame transport links and, on the multiplexed side, a port for ATM cell transport links.

13. Termination equipment according to Claim 12, **characterized in that** said equipment is a multiplexer/demultiplexer comprising, on the demultiplexed side, a plurality of bidirectional ports for virtual circuit frame transport links and, on the multiplexed side, a bidirectional port for virtual circuit frame transport links.

14. Termination equipment according to Claim 12 or 13, **characterized in that** it comprises means of translating connection addresses conveyed by the packets of variable length so as to concentrate the traffic flows present on the multiplexed side ports.

15. Termination equipment according to one of Claims 11 to 14, **characterized in that** the virtual path and virtual circuit identifiers are assigned according to the type of connection concerned.

16. Time-division circuit frames, each divided into a plurality of time slots, each occupied by one octet and intended to transport packets of variable length such as AAL2 packets and, where appropriate, cells such as ATM cells in time-division circuit frames such as E1/T1 frames, each divided into a plurality of time slots, each occupied by one octet, the consecutive octets of each packet of variable length and of each cell being located in consecutive time slots of at least one group of time slots of said frames, the first octet of a packet or of a cell being placed in a time slot pointed to by a pointer occupying a specific time slot of said corresponding group of time slots, **characterized in that** each pointer is assigned a virtual circuit address defining a virtual circuit for the transport of said packet or of said cell pointed to by said pointer and the or each packet (s) or cell(s) in the time slots of the frame belonging to the same group of time slots as said packet or said cell pointed to by said pointer.

**Patentansprüche**

1. Verfahren zum Transport von Paketen mit variabler Länge, wie AAL2-Paketen, und ggf. zum Transport von Zellen wie ATM-Zellen, in Rahmen von Zeitschaltungen wie E1/T1-Rahmen, die je in mehrere Zeitintervalle aufgeteilt sind, von denen jedes von einem Byte besetzt ist, wobei die aufeinanderfolgenden Bytes jedes Pakets mit variabler Länge und jeder Zelle sich in aufeinanderfolgenden Zeitintervallen mindestens einer Gruppe von Zeitintervallen der Rahmen befinden, wobei das erste Byte eines Pakets oder einer Zelle in einem von einem Zeiger angezeigten Zeitintervall angeordnet ist, der ein spezifisches Zeitintervall der entsprechenden Gruppe von Zeitintervallen besetzt, **dadurch gekennzeichnet, dass** jedem Zeiger eine Adresse einer virtuellen Schaltung zugeordnet ist, die eine virtuelle Schaltung für den Transport des Pakets oder der Zelle, worauf der Zeiger zeigt, sowie das oder die Pakete oder Zellen in den Zeitintervallen des Rahmens definiert, die zur gleichen Gruppe von Zeitintervallen gehören wie das Paket oder die Zelle, worauf der Zeiger zeigt.

2. Verfahren zum Transport von Paketen nach Anspruch 1, **dadurch gekennzeichnet, dass** der Zeiger und die Adresse der virtuellen Schaltung aus Bits des gleichen Bytes bestehen.

3. Verfahren zum Transport von Paketen nach Anspruch 1 oder 2, **dadurch gekennzeichnet, dass** der Wert des Zeigers dem Rang in der betrachteten Gruppe des ersten Bytes der Kopfzeile des entsprechenden Pakets minus eins gleicht, oder, wenn der Rahmen teilweise leer ist und keine Paket-Kopfzeile oder keine vollständige Paket-Kopfzeile enthält, dem Rang in der betrachteten Gruppe des ersten leeren Bytes minus eins gleicht.

4. Verfahren zum Transport von Paketen nach Anspruch 3, **dadurch gekennzeichnet, dass** der Wert des Zeigers Null ist, wenn das erste Byte des Pakets oder der Zelle sich in dem Zeitintervall befindet, das direkt auf dasjenige folgt, das dem Zeiger zugeteilt ist.

5. Verfahren zum Transport von Paketen nach Anspruch 3 oder 4, **dadurch gekennzeichnet, dass** der Wert des Zeigers einem spezifischen Wert gleicht, zum Beispiel der Anzahl von Zeitintervallen, die jeder Rahmen enthält, wenn alle Zeitintervalle der entsprechenden Gruppe leer sind.

6. Verfahren zum Transport von Paketen nach einem der Ansprüche 3 bis 5, **dadurch gekennzeichnet, dass** der Zeigerwert einem spezifischen Wert gleicht, zum Beispiel der Anzahl von Zeitintervallen, die jeder Rahmen enthält, minus eins, wenn alle Zeitintervalle der Gruppe von den Bytes eines Pakets oder einer Zelle besetzt sind, deren Kopfzeile sich im vorhergehenden Rahmen befindet.

7.  Verfahren zum Transport von Paketen nach einem der vorhergehenden Ansprüche, **dadurch gekennzeichnet, dass** für den Transport der Pakete und der Zellen jeder Rahmen mehrere Gruppen von Zeitintervallen aufweist.

8.  Verfahren zum Transport von Paketen nach einem der Ansprüche 1 bis 6, **dadurch gekennzeichnet, dass** für den Transport der Pakete und der Zellen jeder Rahmen eine einzige Gruppe von Zeitintervallen aufweist, die alle verfügbaren Zeitintervalle jedes Rahmens besetzt.

9.  Verfahren zum Transport von Paketen nach einem der Ansprüche 1 bis 6, **dadurch gekennzeichnet, dass** jeder Rahmen für den Transport der Pakete und der Zellen eine einzige Gruppe von Zeitintervallen aufweist, die die verfügbaren Zeitintervalle jedes Rahmens nur teilweise besetzt.

10. Verfahren zum Transport von Paketen nach einem der vorhergehenden Ansprüche, **dadurch gekennzeichnet, dass** die oder jede Gruppe in nicht aufeinanderfolgende Untergruppen von Zeitintervallen aufgeteilt ist.

11. Endeinrichtung von Verbindungen zum Transport von Paketen mit variabler Länge, wie den AAL2-Paketen, und ggf. von Zellen, wie den ATM-Zellen, und dies mittels Rahmen virtueller Schaltungen gemäß einem Transportverfahren nach Anspruch 1 oder 2, wobei die Einrichtung die Pakete im Zusammenhang mit von einem virtuellen Kanalidentifizierer und einem virtuellen Schaltungsidentifizierer identifizierten Zellen verarbeitet, **dadurch gekennzeichnet, dass** sie eine Korrespondenztabelle zwischen der virtuellen Schaltungsadresse der so transportierten Pakete oder Zellen und den virtuellen Kanalidentifizierern und virtuellen Schaltungsidentifizierern der Zellen aufweist.

12. Endeinrichtung nach Anspruch 11, **dadurch gekennzeichnet, dass** die Einrichtung ein Multiplexer/Demultiplexer ist, der auf der demultiplexierten Seite mehrere Ports für Verbindungen zum Transport in Rahmen von virtuellen Schaltungen und auf der multiplexierten Seite einen Port für Verbindungen zum Transport in ATM-Zellen aufweist.

13. Endeinrichtung nach Anspruch 12, **dadurch gekennzeichnet, dass** die Einrichtung ein Multiplexer/Demultiplexer ist, der auf der demultiplexierten Seite mehrere Zweiwegeports für Verbindungen zum Transport in Rahmen von virtuellen Schaltungen und auf der multiplexierten Seite einen bidirektionalen Port für Verbindungen zum Transport in Rahmen von virtuellen Schaltungen aufweist.

14. Endeinrichtung nach Anspruch 12 oder 13, **dadurch gekennzeichnet, dass** sie Mittel zur Übersetzung der Verbindungsadressen aufweist, die von den Paketen mit variabler Länge getragen werden, um die Verkehrsströme zu konzentrieren, die auf den Ports auf der multiplexierten Seite vorhanden sind.

15. Endeinrichtung nach einem der Ansprüche 11 bis 14, **dadurch gekennzeichnet, dass** die virtuellen Kanalidentifizierer und virtuellen Schaltungsidentifizierer je nach dem Typ der Verbindung zugeteilt sind.

16. Rahmen von Zeitschaltungen, die je in mehrere Zeitintervalle aufgeteilt sind, welche je von einem Byte besetzt und dazu bestimmt sind, Pakete variabler Länge, wie AAL2-Pakete, und ggf. Zellen, wie ATM-Zellen, in Rahmen von Zeitschaltungen wie E1/T1-Rahmen zu transportieren, die je in mehrere Zeitintervalle aufgeteilt sind, die je von einem Byte besetzt sind, wobei die aufeinanderfolgenden Bytes jedes Pakets variabler Länge und jeder Zelle sich in aufeinanderfolgenden Zeitintervallen mindestens einer Gruppe von Zeitintervallen der Rahmen befinden, wobei das erste Byte eines Pakets oder einer Zelle in einem Zeitintervall angeordnet ist, auf das ein Zeiger zeigt, der ein spezifisches Zeitintervall der entsprechenden Gruppe von Zeitintervallen besetzt, **dadurch gekennzeichnet, dass** jedem Zeiger eine: virtuelle Schaltungsadresse zugeordnet ist, die eine virtuelle Schaltung für den Transport des Pakets oder der Zelle, worauf der Zeiger zeigt, sowie das oder die Pakete oder Zellen in den Zeitintervallen des Rahmens definiert, die zur gleichen Gruppe von Zeitintervallen gehören wie das Paket oder die Zelle, worauf der Zeiger zeigt.

H_CPS

P_CPS

| CID | LI | UUI | HEC |

**Fig. 1**

| Rang It | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |
|---|---|---|---|---|---|---|---|---|---|---|---|---|---|---|---|---|---|---|---|---|---|---|---|---|---|---|---|---|---|---|---|
| N° Octet | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | |
| Trame n | | | | En-tête | | | | | | | | | | | Cellule ATM | | | | | | | | | | | | | | | | |
| Trame n+1 | | | | | | | | Info | | | | | | | | | | | | | | | | | | | Info | | | | |
| Trame n+2 | | Info | | | | | | | | | | | | | | | | | | | | | | | | | | | | | |
| Trame n+3 | | | | | | | | | | | | | | | | | | | Cellule vide | | | | | | | | | | | | |
| Trame n+4 | | | | | | | | | | | | Info | | | Cellule ATM | | | | | | | | | | | | | | | | |
| Trame n+5 | | | | | | | | | | | | | | | | | | | | | | | | | | | | | | | |

**Fig. 2**

| | 2 | 1 | 0 |
|---|---|---|---|
| | | | AdVC |

**Fig. 7**

EP 1 396 123 B1

| 1 | 2 | 3 | 4 | 5 | 6 | 7 | 8 | 9 | 10 | 11 | 12 | 13 | 14 | 15 | 17 | 18 | 19 | 20 | 21 | 22 | 23 | 24 | 25 | 26 | 27 | 28 | 29 | 30 | 31 | Rang IT |
|---|---|---|---|---|---|---|---|---|----|----|----|----|----|----|----|----|----|----|----|----|----|----|----|----|----|----|----|----|----|---------|
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | N° octet |
| | | | ▓ | ▓ | ▓ | ▓ | ▓ | | | | | | | | | | | | | | | | | | | | | | | Trame n |
| | | | | | | | | | | | | | | | | | | | | | | | | | | | | | | Trame n+1 |
| | | | | | | | | | | | | | | | | | | | | | | | | | | | | | | Trame n+2 |
| | | | ▓ | ▓ | ▓ | ▓ | ▓ | | | | | | | | | | | | | | | | | | | | | | | Trame n+3 |
| | | | | | | | | | | | | | | | | | | | | | | | | | | | | | | Trame n+4 |
| | | | | | | | | | | | | | | | | | | | | | | | ▓ | | | | | | | Trame n+5 |
| | | | ▓ | ▓ | ▓ | ▓ | | | | | | | | | | | | | | | | | | | | | | | | Trame n+6 |

**Fig. 3**

EP 1 396 123 B1

PTR →

| | 1 | 2 | 3 | 4 | 5 | 6 | 7 | 8 | 9 | 10 | 11 | 12 | 13 | 14 | 15 | 17 | 18 | 19 | 20 | 21 | 22 | 23 | 24 | 25 | 26 | 27 | 28 | 29 | 30 | 31 | Rang IT |
|---|---|---|---|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | Rang dans le groupe |
| 2 | | | ▓ | ▓ | ▓ | | | | | | | | | | | | | | | | | | | | | | | | | | Trame n |
| 13 | | | | | | | | | | | | | | ▓ | ▓ | ▓ | | | | | | | | | | | | | | | Trame n+1 |
| 28 | | | | | | | | | | | | | | | | | | | | | | | | | | | | | ▓ | | Trame n+2 |
| 15 | ▓ | ▓ | | | | | | | | | | | | | | | | | | | | | | | | | | | | | Trame n+3 |
| 0 | ▓ | ▓ | ▓ | | | | | | | | | | | | | | | | | | | | | | | | | | | | Trame n+4 |
| 19 | | | | | | | | | | | | | | | | | | | | | | | | | | | | | | | Trame n+5 |
| 31 | | | | | | | | | | | | | | | | | | | | | | | | | | | | | | | Trame n+6 |
| 0 | ▓ | ▓ | ▓ | | | | | | | | | | | | | | | | | | | | ▓ | ▓ | ▓ | | | | | | Trame n+7 |
| 30 | | | | | | | | | | | | | | | | | | | | | | | | | | | | | | | Trame n+8 |
| 2 | | | ▓ | ▓ | ▓ | | | | | | | | | | | | | | | | | | | | | | | | | | Trame n+9 |

**Fig. 4**

PTR ↓

SG1     SG2

| 1 | 2 | 3 | 4 | 5 | 6 | 7 | 8 | 9 | 10 | 11 | 12 | 13 | 14 | 15 | 17 | 18 | 19 | 20 | 21 | 22 | 23 | 24 | 25 | 26 | 27 | 28 | 29 | 30 | 31 | Rang IT |
|---|---|---|---|---|---|---|---|---|---|---|---|---|---|---|---|---|---|---|---|---|---|---|---|---|---|---|---|---|---|---|
|  |  |  | 1 | 2 | 3 | 4 | 5 | 6 | 7 | 8 | 9 | 10 | 11 | 12 | 13 |  |  |  |  | 14 | 15 | 16 | 17 |  |  |  |  |  |  | Rang dans le groupe |
|  |  | 2 |  |  | ▓ | ▓ | ▓ |  |  |  |  |  |  |  |  |  |  |  |  |  |  |  |  |  |  |  |  |  |  |  | Trame n |
|  |  | 31 |  |  |  |  |  |  |  |  |  |  |  |  |  |  |  |  |  |  |  |  |  |  |  |  |  |  |  | Trame n+1 |
|  |  | 1 |  | ▓ | ▓ | ▓ |  |  |  |  |  |  |  |  |  |  |  |  |  |  |  |  |  |  |  |  |  |  |  | Trame n+2 |
|  |  | 11 |  |  |  |  |  |  |  |  |  |  |  | ▓ | ▓ |  |  |  |  | ▓ |  |  |  |  |  |  |  |  |  | Trame n+3 |
|  |  | 14 |  |  |  |  |  |  |  |  |  |  |  |  |  |  |  |  |  |  | ▓ | ▓ | ▓ |  |  |  |  |  |  | Trame n+4 |
|  |  | 31 |  |  |  |  |  |  |  |  |  |  |  |  |  |  |  |  |  |  |  |  |  |  |  |  |  |  |  | Trame n+5 |
|  |  | 0 | ▓ | ▓ | ▓ |  |  |  |  |  |  |  |  |  |  |  |  |  |  |  |  |  |  |  |  |  |  |  |  | Trame n+6 |
|  |  | 11 |  |  |  |  |  |  |  |  |  |  |  |  |  |  |  |  |  |  |  |  |  |  |  |  |  |  |  | Trame n+7 |

**Fig. 5**

EP 1 396 123 B1

21

PTR1     G1     PTR2     G2

| 1 | 2 | 3 | 4 | 5 | 6 | 7 | 8 | 9 | 10 | 11 | 12 | 13 | 14 | 15 | 17 | 18 | 19 | 20 | 21 | 22 | 23 | 24 | 25 | 26 | 27 | 28 | 29 | 30 | 31 | Rang des IT |
|---|---|---|---|---|---|---|---|---|----|----|----|----|----|----|----|----|----|----|----|----|----|----|----|----|----|----|----|----|----|-------------|
| | 1 | 2 | 3 | 4 | 5 | 6 | 7 | 8 | 9 | 10 | 11 | 12 | 13 | 14 | 15 | 16 | 17 | 18 | 19 | 20 | 21 | | 1 | 2 | 3 | 4 | 5 | 6 | 7 | Rang dans le groupe |
| 2 | | | ▓ | ▓ | ▓ | | | | | | | | | | | | | | | | | 31 | | | | | | | | Trame n |
| 19 | | | | | | | | | | | | | | | | | | | | ▓ | ▓ | 0 | ▓ | ▓ | ▓ | | | | | Trame n+1 |
| 30 | ▓ | | | | | | | | | | | | | | | | | | | | | 30 | | | | | | | | Trame n+2 |
| 30 | | | | | | | | | | | | | | | | | | | | | | 30 | | | | | | | | Trame n+3 |
| 7 | | | | | | | | | | | | | | | | | | | | | | 30 | | | | | | | | Trame n+4 |
| 31 | | | | | | | | | | | | | | | | | | | | | | 3 | | | | ▓ | ▓ | ▓ | | Trame n+5 |
| 31 | | | | | | | | | | | | | | | | | | | | | | 30 | | | | | | | | Trame n+6 |
| 0 | ▓ | ▓ | ▓ | | | | | | | | | | | | | | | | | | | 30 | | | | | | | | Trame n+7 |

**Fig. 6**

PTR  
AdVC

| 1 | | 2 | 3 | 4 | 5 | 6 | 7 | 8 | 9 | 10 | 11 | 12 | 13 | 14 | 15 | 17 | 18 | 19 | 20 | 21 | 22 | 23 | 24 | 25 | 26 | 27 | 28 | 29 | 30 | 31 | Rang IT |
|---|---|---|---|---|---|---|---|---|---|----|----|----|----|----|----|----|----|----|----|----|----|----|----|----|----|----|----|----|----|----|---------|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | Rang dans le groupe |
| 2 | 1 | | | | | | | | | | | Paquet AAL2 (a) | | | | | | | | | | | | | | | | | | | Trame n |
| 13 | 2 | | | | | | | | | | | | | | | | | | Paquet AAL2 (b) | | | | | | | | | | | | Trame n+1 |
| 28 | 1 | | | | | | | | | | | | | | | | | | | | | | | | | | | | | | Trame n+2 |
| 15 | 0 | | | Paquet AAL2 (c) | | | | | | | | | | | | | | | | | | | | | | | | | | | Trame n+3 |
| 31 | 0 | | | | | | | | | | | | | | | | | | | | | | | | | | | | | | Trame n+4 |
| 0 | 6 | | | | | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | | Trame n+5 |
| 24 | 0 | 30 | 31 | 32 | 33 | 34 | 35 | 36 | 37 | 38 | 39 | 40 | 41 | 42 | 43 | 44 | 45 | 46 | 47 | 48 | 49 | 50 | 51 | 52 | 53 | | | | | | Trame n+6 |
| 0 | 1 | | | | | | | Paquet AAL2 (d) | | | | | | | | | | | | | | | | | | | | | | | Trame n+7 |
| 5 | 3 | | | | | | | | | | | | | Paquet AAL2 (e) | | | | | | | | | | | | | | | | | Trame n+8 |
| 30 | 3 | | | | | | | | | | | | | Paquet AAL2 (f) | | | | | | | | | | | | | | | | | Trame n+9 |
| 20 | 7 | | | | | | | | | | | | | | | | | | | | | | | | | | 6 | 7 | 8 | 9 | Trame n+10 |
| 31 | 7 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | Trame n+11 |
| 15 | 4 | 39 | 40 | 41 | 42 | 43 | 44 | 45 | 46 | 47 | 48 | 49 | 50 | 51 | 52 | 53 | | | | Paquet AAL2 (g) | | | | | | | | | | | Trame n+12 |
| 25 | 0 | | | | | | | | | | | | | | | | | | | | | | | | | | | | | | Trame n+13 |
| 31 | 0 | | | | | | | | | | | | | | | | | | | | | | | | | | | | | | Trame n+14 |

**Fig. 8**

EP 1 396 123 B1